# EUROPEAN PATENT APPLICATION

(11) **EP 4 827 073 A1**
(43) Date of publication of application: **21.10.2026**
(21) Application number: 25170359.1
(22) Date of filing: 14.04.2025
(51) Int. Cl.: H04M 3/51

(54) **SYSTEM FOR ASSISTING AN EMERGENCY CALL RESPONDER IN OBTAINING INFORMATION RELATED TO AN EMERGENCY CALL**

(71) Applicant: HONDA MOTOR CO., LTD., Tokyo 105-8404 (JP)
(72) Inventor: Brulin, Sebastian, 63073 Offenbach/Main (DE); Schön, Oliver, 63073 Offenbach/Main (DE)
(74) Representative: Roth, Sebastian

(57) **Abstract**

A system for assisting an emergency call responder in obtaining information related to an emergency call comprises a responder interface enabling communication with an emergency call responder, information processing means connected to the responder interface and at least one information source, The information processing means is configured to obtain information from the at least one information source in information source specific format, to convert the obtained information into text format and to forward the information to the responder interface based on the text format.

## Description

The present invention is related to responding to an emergency call and specifically regards a system for assisting an emergency call responder in obtaining information related to such emergency call.

Success of an operation initiated when an emergency call is received in a rescue control center in most cases strongly depends on the necessary response time. The time from the moment an emergency call is received in the rescue control center until appropriate measures can be taken by the rescue team needs to be as short as possible. However, in many situations, a significant amount of time is needed until the rescue team received important information based on which an appropriate rescuing measure can be executed. This is particularly problematic in situations where the person or entity initiating the emergency call is not able to provide necessary information to the person taking the call in the rescue control center, hereinafter also denoted emergency call responder. One example may be a situation, in which the victim itself is not able to make the rescue call but other people in the environment of the victim are able to do so, certain information regarding the victim may not be provided by the people making the emergency call. Another example is a situation, in which the system by itself initiates the emergency call upon detection of an emergency event. Known systems that are able to detect an emergency event have limited functionality for analyzing the situation and decide whether an emergency call needs to be initiated. Consequently, some information that would be valuable to have at hand when the rescuing operation is started can only be obtained by the rescue team when arriving at the victim. This may even lead to situations where the rescue team only upon arrival at the victim recognizes that additional support by another team or an additional doctor or a certain transport system is required. In many cases, such waste of time can be avoided if the emergency call responder received additional information directly when taking the emergency call.

It is therefore an object of the present invention to provide a system for assisting an emergency call responder in obtaining information related to an emergency call.

This object is achieved by a system according to independent claim 1. The dependent claims define additional advantageous features and aspects
The present invention provides a system for assisting an emergency call responder in obtaining information, which is related to an emergency call. The system comprises a responder interface, information processing means, and at least one information source connected to the information processing means. The responder interface enables communication of the emergency call responder, for example by establishing telephone communication with a person who initiated the emergency call and/or with the information processing means. In existing systems, the emergency call responder is a trained person receiving emergency calls in the rescue control center and in initiating a rescue operation based on the received information. An important aspect of the present invention is that such existing systems may be improved by enabling such person to collect additional information. However, it is also possible, that another agent (nonhuman) fulfils this function. In any case, decisions made by the emergency call responder rely on information received in order to take appropriate measures when initiating the rescue operation.

The information processing means according to the present invention is connected to the responder interface and, additionally, to at least one information source. The information processing means is configured to obtain information from the at least one information source. The information obtained from a particular information source is provided by the respective information source in an information source specific format. The processing means is configured to convert the obtained information into text format and to forward at least part of the information obtained from the information source to the responder interface based on the text format. It is to be noted, that before forwarding the information to the responder interface, additional processing of the information in the text format may be executed. Accordingly, the inventive system is not limited to providing information to the responder interface in text format. In case that a plurality of information sources is connected to the processing means, the conversion of information into text form allows to use a common structure of information from various sources for further processing and finally outputting the information to the emergency call responder.

One great advantage of the present invention is that the information provided to the emergency call responder can be enhanced over the information directly received by the person or device making the emergency call. Using additional information sources for obtaining information and gathering this information by the processing means enables to obtain information the victim itself may not be aware of even in a situation where the emergency call responder might be able to talk to the victim. Converting information obtained from the at least one information source into text format on the other hand enables an easy integration into existing systems using the emergency call responder interface.

According to an advantageous embodiment, the system comprises a plurality of information sources and information received from these information sources is fused by the information processing means. Since fusing of the information is done automatically upon reception of the information from the plurality of information sources, the effort necessary by the emergency call responder to collect all required information in order to enable an appropriate decision on the operation to be initiated can be significantly reduced. In essence, this leads to even more time being saved before the appropriate measures can be taken.

Preferably, the information processing means is configured to apply a large language model for at least one of information analysis and information fusing. As mentioned above, it is preferred that information received from the information sources is converted into text format. Thus, the processing means can further process information in text format using a large language model in order to fuse the information received from the plurality of information sources. Therefore, providing redundant information to the emergency call responder can be avoided and the accumulated on information can be provided to the emergency call responder in a consistent way. On the other hand, large language models are available that extract information which is considered to be relevant from a larger context that might be delivered by the information sources.

In order to further reduce the adaptation of existing systems necessary in order to implement the present invention, it is preferred that the system comprises a text-to-speech module, configured to convert information from the text format into a speech signal. Before presenting information converted in the text format to the emergency call responder, information in the text format is processed by the text-to-speech module so that a speech signal can be output to the emergency call responder by the responder interface. It is to be noted that such text-to-speech module may be included in the information processing means, but it is also possible to include the text-to-speech module into the responder interface or provide it as a separate entity.

Generally, the information sources may comprise different types of information sources. One preferred information source comprises an environment representation generation module. The environment representation generation module is configured to generate an environment representation and to forward the representation to the information processing means. According to one preferred embodiment, the environment representation generation module is a camera capturing an image of the environment of the location where the emergency situation occurred. The captured image is then processed in the information processing means in order to analyze the content of the image for extracting information to be provided to the emergency call responder.

Preferably, the analysis of the captured image and the extraction of information is based on at least one relevance criterion. The relevance criterion is a criterion according to which the analysis of the representation is performed in the information processing means. A plurality of relevance criteria may be used. Such a plurality of relevance criteria may include one or more predefined relevance criteria, which are applied for any received emergency call. Such generally applicable relevance criteria may be stored in a memory, which can be accessed or is included in the information processing means. Additionally, or alternatively, the at least one relevance criterion can be defined situation dependent. The definition of such situation dependent relevance criterion can for example be performed by the information processing means based on the information already obtained. For example, in case that one of the information sources provides an information that there is fire at the location of the emergency case, the system, using its LLM capability, can determine that an additional relevant information may be visibility. Accordingly, the representation of the environment is analyzed with respect to visibility at the location of the victim.

Additionally or alternatively, it is also possible that at least one of the one or more relevance criteria is defined by the emergency call responder. The responder interface is connected to the information processing means and, using for example its LLM functionality, the information processing means can analyze input received from the emergency call responder based on which at least one relevance criterion can be determined.

According to one preferred embodiment, the information processing means applies a visual language model, preferably a visual question answering (VQA) model, for analyzing the representation and generating text information based on the extracted information. Applying such visual question answering model allows to use speech input provided by the emergency call responder in order to define the relevance criteria and then conduct an analysis of the representation of the environment of the emergency location based on the defined relevance criteria. The visual question answering model is specifically useful to enable the emergency call responder to obtain information on scene elements included in the representation of the environment of the emergency situation. For example, victim count, conditions and hazards can be identified using such visual question answering applied to the representation of the environment.

According to another advantageous aspect, the at least one information source may comprise a teleoperable robot, which can be controlled by the information processing means configured to generate control signals. These control signals can be generated based on input received from the emergency call responder or in response to information analysis performed by the large language model. For example, an analysis result created by the large language model has limited confidence, and a camera is mounted on the teleoperable robot. The information processing means may then (automatically) generate control signals in order to move the teleoperable robot to another position in order to enable capturing an additional image for providing a further representation of the environment with a different perspective. Such different perspective may for example enable to identify objects which were occluded in the first representation. On the other hand, the information processing means may generate control signals based on input received from the emergency call responder to allow the emergency call responder to directly control operation of the teleoperable robot. Specifically the latter way of controlling the teleoperable robot directly enables the emergency call responder to interact with the system in obtaining additional information the emergency call responder considers to be relevant for situation assessment.

It is to be noted that the teleoperable robot is not limited to carrying a camera in order to enable capturing images from different perspectives. Other tasks that may be executed by the teleoperable robot can include securing the location of the emergency situation, informing people available in the environment of the emergency situation, requesting for assistance, and much more. Even maneuvering the victim to achieve a stable position of the victim may be performed by such teleoperable robot, specifically even controlled by the emergency call responder or another teleoperator.

According to another advantageous aspect, the at least one information source comprises a sensor measuring at least one of: at least one physiological parameter of the victim and at least one environmental parameter. Measuring physiological parameters may include, for example, at least one of heart rate, respiration rate, blood pressure, body temperature. Environmental parameters may include at least one of precipitation, temperature, wind. At least some of the physiological parameters may be sensed using wearable devices of the victim.

Preferably, the information processing means adds supplementary information to information provided to the emergency call responder. Information provided to the emergency call responder is information related to the emergency situation gathered from the at least one information source. Supplementary information added to information provided to the emergency call responder may include at least one of: information on processing of information before providing it to the emergency call responder, confidence information for forwarded information, recommendation. The supplementary information is intended to avoid misinterpretations by the emergency call responder by providing details how information related to the emergency situation is generated. For example, the supplementary information may indicate that the information provided to the emergency call responder is AI-processed. This may even include a recommendation to verify details if considered crucial for making a decision. The details how the information related to the emergent situation is generated may even comprise an object detection probability.

A preferred embodiment of the present invention will now be explained with reference to the attached drawings in which
Figure 1 shows a block diagram illustrating the major components of the inventive system, and
Figure 2 shows the general process implementing the inventive system.

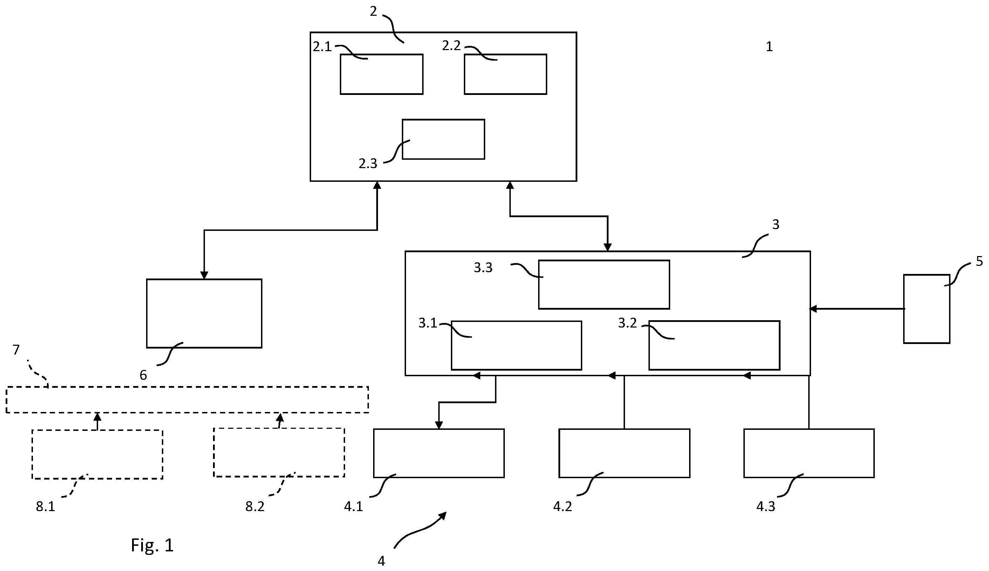

Figure 1 shows a block diagram of a system 1 according to the present invention. The system 1 comprises a responder interface 2 enabling communication of an emergency call responder. Typically, trained humans working in a rescue control center are emergency call responders. For the explanations provided hereinafter it is assumed that such human is an emergency call responder.

The responder interface 2 may comprise a plurality of different entities enabling communication with the emergency call responder. Such communication in first-place enables that an incoming telephone call, emergency call, is received by the emergency call at responder. Thus, the responder interface 2 typically comprises a microphone 2.1 and a speaker 2.2. Additionally, for providing information, which is not presented using a speech signal, the responder interface 2 may comprise a display 2.3.

The responder interface 2 is connected to an information processing means 3. The information processing means 3 preferably includes a large language model LLM 3.1, a visual language model 3.2, especially a visual question answering module, and, preferably, a text-to-speech module 3.3. It is to be noted that in the illustrated embodiment, the text to speech module 3.3 is included in the information processing means 3, which allows to output a speech signal by the information processing means 3. Such output speech signal from the information processing means 3 may then be provided to the responder interface 2 allowing to output the information included in the speech signal directly by the speaker 2.2.

The information processing means 3 is connected to a plurality of information sources 4. In the illustrated embodiment, three information sources 4.1, 4.2 and 4.3 are illustrated. However, the number of information sources 4 is not limited to three and less or even more information sources 4 may be connected to the information processing means 3.

One preferred information source is a representation generation unit. A preferred example of such representation generation unit is a camera 4.1 allowing capturing images of its environment. It is to be noted that the plurality of cameras may be connected to the system 1. Generally, a plurality of information sources 4 can be connected to the information processing means 3. In order to assure that only relevant information sources 4 are included in a specific scenario for obtaining information, these information sources 4 can be addressed individually. In case of a plurality of cameras 4.1, this enables capturing images only in the respective environment relevant for the specific emergency case.

Another preferred information source 4 is a sensor 4.2. In the illustrated embodiment, a single sensor 4.2 is considered to be representative for any type of sensor that can be considered to be appropriate in order to provide relevant information for assessing an emergency situation. Thus, sensor 4.2 is also representative for a plurality of different sensors. Such sensors 4.2 may, for example, measure blood pressure of the victim, heart rate, respiration rate or any other physiological parameter of the victim.

The sensors 4.2 may be included in wearable devices of the victim or any other device carried by the victim. Typical wearable devices are smartwatches or devices carried by the victim are smart phones. The advantage of using such wearable devices or smartphones is that these devices are equipped with communication capability so that integration in the inventive system 1 is easily possible.

The last example of an information source 4 as illustrated in figure 1 is a database 4.3. For the explanations provided herein, it is considered that the Internet constitutes one such database 4.3. The database 4.3 can be used to provide information, which is generally available information, but might be relevant for assessing the emergency situation. For example, weather conditions or the like in the area of the emergency may be helpful in order to organize the rescue measures accordingly. On the other hand, the database 4.3 may hold information on the victim, for example in a register listing diabetics or the like.

The information processing means 3 may further be connected to a memory 5 storing at least one relevance criterion to be used in the LLM 3.1 and/or VLM 3.2. Although the present invention preferably enables the emergency call responder using the responder interface 2 to interact with the information processing means 3 for defining information, which the emergency call responder would like to receive, it might be advantageous to store at least one relevance criterion which is of general interest or applicable in most emergency situations. Based on such at least one relevance criterion stored in the memory 5, the information processing means 3 can automatically analyze information received from the information sources 4 and provide the respectively extracted information to the emergency call responder via the responder interface 2.

Finally, the system 1 comprises emergency calling means 6. Such emergency calling means 6 may be a telephone, an automatic calling device or the like. An automatic calling device is known in the art and for example provided in many vehicles. In case of an accident, the automatic calling device will directly initiate an emergency call. This is a typical situation, in which a known emergency calling device is not capable of providing any additional information to the emergency call responder. By exploiting information provided by other information sources 4 according to the present invention, the emergency call responder can directly receive additional and valuable information in order to take appropriate decisions.

While the description of the information sources 4 in the present case are limited to explaining the information that can be obtained from the information sources 4 by the information processing means 3, the information sources 4 may comprise also functionality of a teleoperable robot. For example, the camera 4.1 might be mounted on such teleoperable robot. The teleoperable robot can be moved to different positions thereby positioning the camera 4.1 at another location. Control of the teleoperable robot may be performed by the emergency call responder acting as a teleoperator of the teleoperable robot, or by the information processing means 3 generating autonomously control signals for controlling the teleoperable robot.

According to another preferred embodiment, a teleoperable robot may be connected to the information processing means 3 independently from the other information sources 4. The teleoperable robot may thus not only be used to collect additional information for forwarding such information or at least relevant parts thereof to the emergency call responder, but to execute certain tasks that are delegated to the teleoperable robot. These tasks may be defined by the emergency call responder or another person assisting the emergency call responder. In the preferred embodiment, the emergency call responder may define a task to be executed by the teleoperable robot by inputting speech signal via the microphone 2.1 to the information processing means 3. The information processing means 3 may be configured to generate control signals from the input speech signal based on determination of the respective task from the input speech signal. This enables the emergency call responder to execute actions in the environment of the victim, in case that a teleoperable robot is available, even before the rescue team arrives.

In the information processing means 3, information received from the information sources 4 is processed. In particular, information that is provided in a information source specific format is converted into text format. For example, in case that the camera 4.1 provides an image of the environment of the emergency situation, a VQA is used in order to extract relevant information based on input received from the emergency call responder. This relevant information is then converted into a text format in order to enable the further processing to be executed not only for the information provided by the camera 4.1 but also by other information sources 4. Thus, information obtained from any of the plurality of information sources 4 is converted into text format. This conversion into text format may be executed before further analysis of the information received from the respective information source 4 is performed. Once all information is available in text format, this can be processed using an LLM. The LLM module included in the information processing unit 3 is applied to the information received from the information sources 4. When applying the LLM on information received from the information sources 4, at least one relevance criterion may be applied in order to avoid that unnecessary information is reported to the emergency call responder.

The relevance criterion or a plurality of relevance criteria can be defined by the emergency call responder, loaded from the memory 5 or generated by the information processing unit 3 itself.

The LLM may not only extract relevant information from the entirety of information available from the information sources 4, but also fuse the extracted relevant information before providing it to the emergency call responder. Fusing the extracted relevant information avoids redundant provision of information may even disturb and distract the emergency correspond. Thus, by processing all information available from a plurality of different and independent information sources 4 allows consistent presentation of the relevant information in order to optimize assistance of the emergency call responder.

As an extension to the system described above, the architecture can be enhanced through the integration of a decentralized, cooperative pre-fusion layer 7 that enables semantic aggregation of emergency-relevant information across multiple distributed edge devices represented by reference numerals 8.1, 8.2, prior to involvement of the emergency call responder. Such edge devices might at least partially be represented by some of the information sources 4, for example, camera 4.1 and sensor 4.2. This cooperative pre-fusion layer 7 may build upon existing communication protocols (e.g., V2X (Vehicle-to-Everything), MQTT (Message Queueing Telemetry Transport), DDS (Data Distribution Service) ,...), allowing nearby devices such as vehicles, smartphones, wearables, or teleoperated robots to autonomously exchange and relay anonymized, semantically tagged information in the background. Preferably, the system is designed to accommodate heterogeneous device capabilities: while lightweight edge nodes may only be able to generate basic observations (e.g., temperature reading, moving or static, heart rate), more capable nodes such as connected vehicles or fog nodes can perform higher-level semantic fusion, resolve conflicting data, and prioritize critical information using embedded language or vision models.

This fusion of data across nodes ensures effective use of available information, to construct a spatially coherent and redundancy-reduced event summary. This summary is then forwarded to the emergency responder interface 2 in text or speech format via the system 1 including the processing means 3 as described above. Furthermore, the decentralized structure enables resilient information flow even in conditions with weak connectivity: data can be relayed via other nodes until it reaches a processing-capable agent or a connected responder. By distributing processing and communication, the system achieves higher coverage, fault tolerance, and faster access to high-quality situational intelligence without requiring centralized control or full AI stack deployment on each device. This can extend the system for assisting an emergency call responder to be more cooperative, context-aware, and scalable intelligence network and improve the responder's information quality.

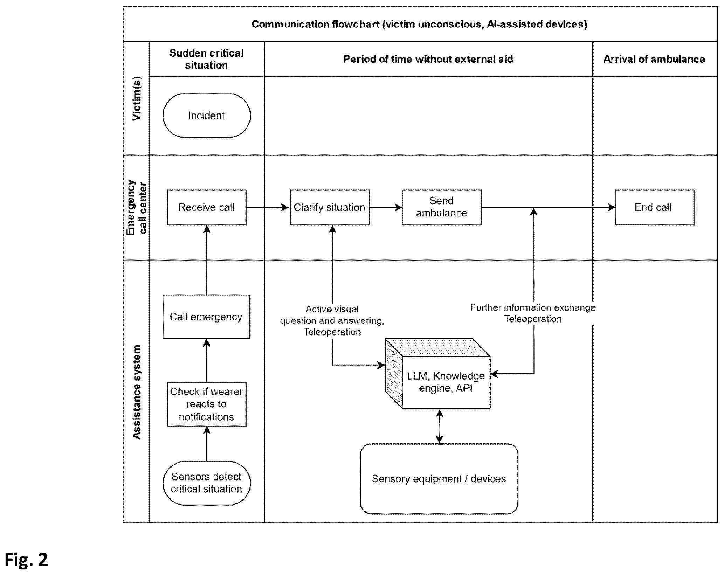

Figure 2 gives an overview over the process starting with an incoming emergency call received by the emergency call responder. The illustrated overview shows a situation, in which an automated emergency call is initiated, for example because sensors detect a critical decision. In the illustrated embodiment, this is performed by a device carried by a person, for example a smart-watch constantly measuring heart rate. After identifying a critical situation, such devices may check whether the wearer reacts notifications and, in case the wearer does not react, it automatically initiates the emergency call.

In the example mentioned above, the sensor identifying a critical situation could be a crash sensor of a vehicle. The reaction check in this case could be performed by the communication and multimedia devices installed in the vehicle.

After the emergency call responder received the emergency call, he starts clarifying the situation. The clarification of the situation includes obtaining additional information from the system 1 as described with reference to figure 1. The information processing means 3 provides relevant information to the emergency call responder and based on the entirety of available information, the emergency call responder will then send an ambulance or take other appropriate measures in order to initiate a rescue operation. As indicated in the simplified illustration of the procedure, in addition to obtaining information from the processing information means 3, an information exchange between the emergency call responder and the information processing means 3 may be performed. This includes defining tasks for a teleoperable robot as explained with reference to figure 1.

Finally, the emergency call will be terminated by the emergency call responder if no additional action is considered to be taken by the emergency call responder or no additional information is available to be considered.

## Claims

1. System for assisting an emergency call responder in obtaining information related to an emergency call, the system comprising:
a responder interface enabling communication with an emergency call responder,
information processing means connected to the responder interface and at least one information source, wherein the information processing means is configured to obtain information from the at least one information source in information source specific format, to convert the obtained information into text format and to forward the information to the responder interface based on the text format.

2. System according to claim 1, comprising a plurality of information sources and the information processing means is configured to fuse information from at least two of the information sources.

3. System according to claim 1 or 2, wherein the processing means is configured to apply a large language model for at least one of information analysis and information fusing.

4. System according to any one of the preceding claims, wherein the system comprises a text-to-speech module configured to convert the information from the text format into a speech signal and to output the speech signal by the responder interface for providing the information to the emergency call responder.

5. System according to any one of the preceding claims, wherein at least one of the information sources is comprises an environment representation generation module configured generate an environment representation and to forward the representation to the information processing means.

6. System according to claim 5, wherein the information processing means is configured to analyze the representation and to extract information from the representation based on at least one relevance criterion.

7. System according to any one of the preceding claims, wherein the information processing means applies a visual language model, preferably visual question answering model, for analyzing the representation and generating text information based on the extracted information.

8. System according to any one of the preceding claims, wherein at least one the information sources is a database and/or the internet and the information processing means is configured to search the database and/or the internet for information based on at least one relevance criteria.

9. System according to any one of the preceding claims 8, wherein at least one of the information sources comprises a teleoperable robot and the information processing means is configured to generate control signals for operating the teleoperable robot based on input from the responder or in response to information analysis performed by the large language model.

10. System according to any one of the preceding claims, wherein at least one of the information sources comprises a sensor measuring at least one of: at least one physiological parameter of a human and environmental parameters.

11. System according to any one of the preceding claims, wherein the processing means is configured to determine the at least one relevance criterion from speech input received from the responder and/or retrieve the at least one relevance criterion from a memory.

12. System according to any one of the preceding claims, wherein the processing means is configured to add supplementary information to the information forwarded to the responder, wherein the supplementary information includes at least one of: information on the processing of the forwarded information, confidence information for the forwarded information, recommendation.
